# EUROPEAN PATENT APPLICATION

(11) **EP 4 254 616 A1**
(43) Date of publication of application: **04.10.2023**
(21) Application number: 21870560.6
(22) Date of filing: 06.08.2021
(51) Int. Cl.: H01M 50/147

(54) **CYLINDRICAL BATTERY CAP AND CYLINDRICAL BATTERY**

(30) Priority: 24.11.2020 CN 202022755176 U
(71) Applicant: Shenzhen Bak Power Battery Co., Ltd., Shenzhen, Guangdong 518000 (CN)
(72) Inventor: ZHAO, Junfeng, Shenzhen, Guangdong 518000 (CN)
(74) Representative: Kuhnen & Wacker Patent- und Rechtsanwaltsbüro PartG mbB
(86) International application number: PCT/CN2021/111311
(87) International publication number: WO 2022/110894

(57) **Abstract**

The present application is applicable to the technical field of lithium batteries, and a cylindrical battery cap and a cylindrical battery are provided. This battery cap includes an explosion-proof piece, an isolation ring, a connecting piece and a sealing ring, the isolation ring is arranged between the explosion-proof piece and the connecting piece, the sealing ring is sleeved on peripheries of the explosion-proof piece, the connecting piece and the isolation ring; the explosion-proof piece includes a connecting part and a welding part, the isolation ring is arranged at the bottom of the connecting part, an edge of the connecting part abuts against the sealing ring, the connecting part is arranged along a circumferential direction of the welding part, and the welding part is welded with the connecting part. According to the cylindrical battery cap provided by the present application, the connecting part of the explosion-proof piece is welded with connecting part of the welding part, so that a fracture pressure of the explosion-proof piece may be controlled more accurately, and an accurate control of fracture pressure of the explosion-proof piece is achieved; thus, forming a gas venting passage in the battery in time is ensured and a battery explosion is avoided. When an internal pressure of the battery is too large, a central part of the explosion-proof pieces is separated from the connecting piece, so that an electric connection of the cylindrical battery cap is cut off, an occurrence of short-circuiting of the battery is avoided, and a safety of the battery is guaranteed.

## Description

This application claims priority to Chinese patent application No. 202022755176.1 filed on November 24, 2020 with CNIPA, the entire contents of which are incorporated herein by reference.

### TECHNICAL FIELD

The present application relates to the technical field of lithium ion battery, and particularly relates to a cylindrical battery cap and a cylindrical battery.

### BACKGROUND

The existing cylindrical lithium ion battery cap includes a top cover, an explosion-proof piece, an isolation ring, a connecting piece and a sealing ring; the top cover is connected with the explosion-proof piece, the isolation ring, the connecting piece and the sealing ring sequentially, the sealing ring is sleeved on a periphery of an inner core of the cap, the cylindrical lithium ion battery cap effectively reduces formation of aluminum melting beads, and the overall safety performance of a battery pack is improved; however, there are too many components in the existing cylindrical battery cap, and these components need to be matched mutually, so that a greater internal resistance value of the cylindrical battery cap is caused; furthermore, a welding part and an edge of the explosion-proof piece are integrally formed by stamping to form an aluminum ring structure; when the internal pressure of the battery is too large, the indentation on the explosion-proof piece cannot be ruptured in time, so that the risk of thermal runaway of battery is prone to occur, and potential safety hazard is caused.

### TECHNICAL PROBLEM

An objective of the embodiments of the present application is to provide a cylindrical battery cap, which is intended to solve the technical problem in the prior art that an indentation on the explosion-proof piece cannot be ruptured in time under the pressure of top cover when an internal pressure of a battery of the existing cylindrical battery cap is too large, and a risk of out of control of battery is prone to occur.

### TECHNICAL SOLUTION

In order to achieve the objective mentioned above, the technical solutions used in the present application are as follows:
a cylindrical battery cap which includes an explosion-proof piece, an isolation ring, a connecting piece and a sealing ring; the isolation ring is arranged between the explosion-proof piece and the connecting piece, and the sealing ring is sleeved on peripheries of the explosion-proof piece, the connecting piece and the isolation ring;
the explosion-proof piece comprises a connecting part and a welding part, the isolation ring is arranged below the connecting part, an edge of the connecting part abuts against the sealing ring, and the connecting part is arranged along a circumferential direction of the welding part, and the welding part is welded with the connecting part.

Furthermore, a rupturable indentation is arranged on the welding part, and the rupturable indentation is arranged to be adjacent to the connecting part; and/or a thickness of the connecting part is greater than a thickness of the welding part.

Furthermore, a central part of the connecting piece is connected with a central part of the welding part.

Furthermore, an indentation is provided on the connecting piece, and the indentation is arranged to be adjacent to two joints of the central part of the welding part and the central part of the connecting piece.

Furthermore, one side of the connecting piece away from the welding part is provided with a groove, and the indentations are located on a bottom of the groove.

Furthermore, the connecting part is provided with a bending part welded with the welding part, the bending part and the welding part are enclosed to form an open groove.

Furthermore, a step is arranged on the bending part, and the welding part is welded with the step.

Furthermore, the welding part and the connecting part are welded using an ultrasonic welding or a laser welding.

Furthermore, an annular protrusion is arranged on the sealing ring, an annular groove is arranged on the connecting part, and the annular groove is configured to match with the annular protrusion.

Furthermore, a cylindrical battery is provided, the cylindrical battery includes the cylindrical battery cap according to any one of the embodiments described above.

### BENEFICIAL EFFECTS

The cylindrical battery cap provided by the present application has the beneficial effects listed below: compared with the related art, due to the arrangement of the cylindrical battery cap of the present application, the pressure generated when the explosion-proof piece is cracked can be more accurately controlled by welding the connecting part of the explosion-proof piece with the connecting part of the welding part, so that the pressure due to rupture of the explosion-proof piece can be accurately controlled, it is ensured that the battery can form a gas venting passage in time, battery explosion can be avoided; when the internal pressure of the battery is too large, the central part of the explosion-proof piece is separated from the connecting piece, the electric connection of the battery cap is cut off, so that the battery cap can be prevented from being short-circuited, the safety of battery is ensured, and the safety of the maintenance personnel is guaranteed. In addition, the top cover with nickel-plated steel structure is reduced, so that an external electrical connecting piece can be directly connected to the connecting part of the explosion-proof valve made from aluminum material, and the contact resistance is reduced; moreover, compared with the existing battery caps, the top cover structure is reduced from the cylindrical battery cap, and the resistance value of the cylindrical battery cap in use state is decreased.

### BRIEF DESCRIPTION OF THE DRAWINGS

In order to describe the embodiments of the present application more clearly, a brief introduction regarding the accompanying drawings that need to be used for describing the embodiments of the present application or the prior art is given below; it is apparent that the accompanying drawings described below are merely some embodiments of the present application, a person of ordinary skill in the art may also acquire other drawings according to the current drawings without paying creative labor.
FIG. 1 illustrates a schematic cross-sectional diagram of a cylindrical battery cap provided by one embodiment of the present application;
FIG. 2 illustrates an enlarged view of a part A of the cylindrical battery cap shown in FIG. 1;
FIG. 3 illustrates a schematic diagram of the cylindrical battery cap being in a cracked state provided by one embodiment of the present application;

Reference numerals in the figures are listed in detail below:
10-explosion-proof piece; 11-connecting part; 12-welding part; 13-rupturable indentation; 14-bending part; 15-open groove;
141-step;
20-isolation ring;
30-connecting piece; 31-indentation; 32-groove;
40-sealing ring; 41-annular protrusion;
200-housing.

### EMBODIMENTS OF THE PRESENT INVENTION

In order to make the technical problem to be solved by the present application, the technical solutions and the advantages of the present application be clearer and more understandable, the present application is further described in detail below with reference to accompanying figures and embodiments. It should be understood that the embodiments described in detail herein are merely intended to illustrate but not to limit the present application.

It needs to be noted that, when one component is described to be "fixed to" or "arranged on" another component, this component may be directly or indirectly arranged on another component. When it is described that one component "is connected with" another component, this component may be directly or indirectly connected to the another component.

In the description of the present application, it needs to be understood that, directions or location relationships indicated by terms such as "length", "width", "up", "down", "front", "rear", "left", "right", "vertical", "horizontal", "top", "bottom", "inside", "outside", and so on are the directions or location relationships shown in the accompanying figures, which are only intended to describe the present application conveniently and simplify the description, but not to indicate or imply that an indicated device or component must have specific locations or be constructed and manipulated according to specific locations; therefore, these terms shouldn't be considered as any limitation to the present application.

In addition, terms such as "the first" and "the second" are only used in describe purposes, and should not be considered as indicating or implying any relative importance, or implicitly indicating the number of indicated technical features. As such, technical feature(s) restricted by "the first" or "the second" can explicitly or implicitly comprise one or more such technical feature(s). In the description of the present application, "a plurality of' has the meaning of at least two, unless there is additional explicit and specific limitation to "a plurality of'.

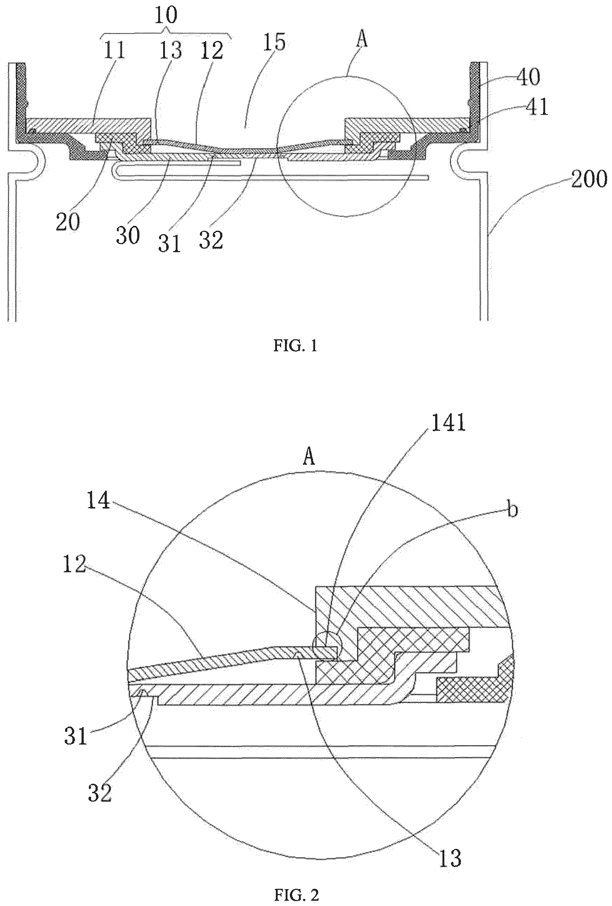

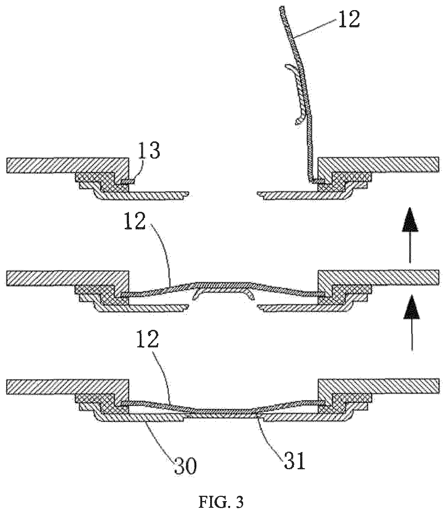

In order to describe the technical solutions of the present application, the technical solutions of the present application are described in detail with reference to the drawings and the embodiments below:
As shown in FIGS. 1-3, a cylindrical battery cap is provided in one embodiment of the present application, this cylindrical battery cap includes an explosion-proof piece 10, an isolation ring 20, a connecting piece 30 and a sealing ring 40, the isolation ring 20 is arranged between the explosion-proof piece 10 and the connecting piece 30, and the sealing ring 40 is sleeved on peripheries of the explosion-proof piece 10, the connecting piece 30, and the isolation ring 20.

The explosion-proof piece 10 includes a connecting part 11 and a welding part 12, the isolation ring 20 is arranged below the connecting part 11, an edge of the connecting part 11 abuts against the sealing ring 40, the connecting part 11 is arranged along a circumferential direction of the welding part 12, and the welding part 12 is welded with the connecting part 11.

The cylindrical battery cap provided by this embodiment of the present application is constituted by the explosion-proof piece 10, the isolation ring 20, the connecting piece 30 and the sealing ring 40, due to this arrangement of the cylindrical battery cap, a head cover is avoided, the number of components of the cap is reduced, and the resistance value of the cap is reduced. In particular, the joint between the connecting part 11 and the welding part 12 of the explosion-proof piece 10 is welded, so that a fracture pressure of the explosion-proof piece 10 may be controlled more accurately, an accurate control of fracture pressure of the explosion-proof piece 10 is achieved, thus, an exhaust passage can be formed in the battery in time to prevent a battery explosion from occurring. When an internal pressure of the battery is too large, a central part of the explosion-proof piece 10 is separated from the connecting piece 30, so that an electric connection of the battery cap is cut off, an occurrence of short-circuiting of the battery is avoided, a safety of the battery is guaranteed, and a safety of the maintenance personnel is guaranteed accordingly. In addition, a component of a nickel-plated steel structure on a top cover of the battery is avoided, so that the external electrical connecting parts can be directly connected to the connecting part 11 of an aluminum explosion-proof valve to reduce a contact resistance; moreover, compared with the caps in the related art, a structure of top cover is reduced, and the resistance value of the cap in use state is reduced.

In addition, it should be noted that the explosion-proof piece 10 is made from an aluminum material.

In some embodiments of the present application, optionally, as shown in FIG. 1 and FIG. 2, the rupturable indentation 13 is formed on the welding part, and the rupturable indentation 13 is configured to be adjacent to the connecting part 11; and/or a thickness of the connecting part 11 is greater than a thickness of the welding part 12.

In this embodiment, when the rupturable indentation 13 is arranged to be adjacent to the connecting part 11, when an internal pressure of the battery is too large, a central part of the welding part 12 is welded with the central part of the connecting piece 30, the connecting piece 30 generates an upward pressure acted on the central part of the welding part 12 to cause the central part of the welding part 12 to be elastically deformed, thereby enabling the rupturable indentation 13 adjacent to the connecting part 11 to be ruptured, so that pressure discharging and gas venting are facilitated; moreover, the thickness of the connecting part 11 of the explosion-proof valve is greater than the thickness of the welding part 12, so that the strength of the battery cap is ensured due to the design of thickness of the connecting part 11 without the top cover, and the design of thickness of the welding part 12 ensures that the rupturable indentation 13 on the explosion-proof valve can be ruptured in time to cut off the electrical connection, thereby ensuring the safety of the battery. In particular, when the internal pressure of the battery is continuously increased, the rupturable indentation 13 of the welding part 12 of the explosion-proof piece 10 is ruptured when a drag force at a welded joint of the connecting part 11 of the explosion-proof piece 10 and the welding part 12 reaches a preset welding pressure threshold, so that a gas venting passage is formed, pressure discharging and gas venting are facilitated, battery explosion is avoided, and the safety of personnel is ensured.

In some embodiments of the present application, optionally, as shown in FIG. 1 and FIG. 2, the central part of the connecting piece 30 is connected with the central part of the welding part 12.

Optionally, a indentation 31 is arranged on the connecting piece 30, and the indentation 31 is arranged to be adjacent to two joints of the central part of the welding part 12 and the central part of the connecting piece 30.

In this embodiment, the central part of the connecting piece 30 is connected with the central part of the welding part 12, and the indentations 31 on the connecting piece 30 is arranged to be adjacent to two joints of the connecting piece 30 and the welding part 12 ; due to this arrangement, when the internal pressure of the battery is too large, the indentation 31 on the connecting piece 30 is ruptured first, so that the electrical connection of the battery cap is cut off.

In this embodiment of the present application, optionally, as shown in FIG. 1 and FIG. 2, one side of the connecting piece 30 away from the welding part 12 is provided with a groove 32, and the indentation 31 are located on a bottom of the groove 32.

In this embodiment, due to this arrangement of the groove 32 of the connecting piece 30, moreover, the indentations 31 of the connecting piece 30 is located on the bottom of the groove 32, so that the groove 32 faces the interior of the battery, when the internal pressure of the battery is too large, the indentation 31 on the connecting piece 30 is prone to be ruptured, and thus cutting off the electrical connection of the battery cap is realized accordingly.

In some embodiments of the present application, optionally, as shown in FIG. 1 and FIG. 2, the connecting part 11 is provided with a bending part 14 which is welded with the welding part 12, the bending part 14 and the welding part 12 are enclosed to form an open groove 15.

Optionally, as shown in FIG. 2, a step 141 is provided on the bending part 14, and the welding part 12 is welded with the step 141.

In this embodiment, the bending part 14 of the connecting part 11 and the welding part 12 are enclosed to form the open groove 15, and a blasting region is formed in the open groove 15, so that a blasting space of the welding part 12 is enlarged, pressure discharging and gas venting are facilitated; moreover, the welding part 12 is welded with the step 141 of the bending part 14, the arrangement of the step 141 facilitates welding of the welding part 12 and the bending part 14 of the connecting part 11, thereby facilitating production and manufacturing.

In some embodiments of the present application, optionally, the joint of the welding part 12 and the connecting part 11 is welded using ultrasonic welding or laser welding.

In this embodiment, ultrasonic welding or laser welding is applied to the welded joint of the welding part 12 and the connecting part 11, thus, it is convenient to produce and manufacture the cylindrical battery cap, production and manufacturing of the cylindrical battery cap are facilitated.

In some embodiments of the present application, optionally, as shown in FIG. 1, an annular protrusion 41 is protruded on the sealing ring 40, an annular groove is concaved on the connecting part 11, and the annular groove is configured to match with the annular protrusion 41.

In this embodiment, the annular protrusion 41 of the sealing ring 40 is engaged with the annular groove of the connecting part 11, so that a sealing effect of the sealing ring 40 is increased, and a sealing performance of the sealing ring 40 with respect to the explosion-proof piece 10 is improved accordingly.

A cylindrical battery is further provided on one embodiment of the present application, this cylindrical battery includes the cylindrical battery cap according to any one of the above embodiments.

As shown in FIG. 1, specifically, a housing 200 of the cylindrical battery cap is disposed outside the sealing ring 40 of the cap.

The cylindrical battery provided by this embodiment of the present application has the cylindrical battery cover cap described in any one of the embodiments described above, therefore, the cylindrical battery cover cap has all beneficial effects of the cylindrical battery cover cap, so that the beneficial effects of the cylindrical battery will not be repeatedly described here.

In conclusion, according to the cylindrical battery cap provided by the embodiment of the present application, the connecting part of the explosion-proof piece is welded with the connecting part of the welding part, so that the fracture pressure of the explosion-proof piece can be more accurately controlled, forming the gas venting passage in time by the battery is ensured, so that battery explosion is avoided; the central part of the explosion-proof piece is separated from the connecting piece when the internal pressure of the battery is too large, the electric connection of the battery cap is cut off, the battery is avoided from being short-circuited, the safety of the battery is guaranteed, and the safety of the maintenance personnel is guaranteed. Moreover, the thickness of the connecting part of the explosion-proof valve is greater than the thickness of the welding part, so that the strength of the cylindrical battery cap without top cover is ensured due to this design of the thickness of the connecting part. Due to the design of thickness of the welding part, it is ensured that the rupturable indentation on the explosion-proof valve can be ruptured in time to cut off the electrical connection, thereby ensuring the safety of the battery. In addition, a top cover component with nickel-plated steel structure is reduced, so that an external electric connecting piece can be directed with a connecting part of the explosion-proof valve made of aluminum, and a contact resistance is reduced accordingly. Furthermore, compared with the existing battery caps, the structure of the top cover is reduced from the cylindrical battery cap, and the resistance value of the cylindrical battery cap during use is decreased.

## Claims

1. A cylindrical battery cap, **characterized in that**, the cylindrical battery cap comprises an explosion-proof piece, an isolation ring, a connecting piece and a sealing ring; the isolation ring is arranged between the explosion-proof piece and the connecting piece, and the sealing ring is sleeved on peripheries of the explosion-proof piece, the connecting piece and the isolation ring;
the explosion-proof piece comprises a connecting part and a welding part, the isolation ring is arranged below the connecting part, an edge of the connecting part abuts against the sealing ring, and the connecting part is arranged along a circumferential direction of the welding part, and the welding part is welded with the connecting part.

2. The cylindrical battery cap according to claim 1, wherein a rupturable indentation is arranged on the welding part, and the rupturable indentation is arranged to be adjacent to the connecting part; and/or
a thickness of the connecting part is greater than a thickness of the welding part.

3. The cylindrical battery cap according to claim 1, wherein a central part of the connecting piece is connected with a central part of the welding part.

4. The cylindrical battery cap according to claim 3, wherein an indentation is provided on the connecting piece, and the indentation is arranged to be adjacent to two joints of the central part of the welding part and the central part of the connecting piece.

5. The cylindrical battery cap according to claim 4, wherein one side of the connecting piece away from the welding part is provided with a groove, and the indentation is located on a bottom of the groove.

6. The cylindrical battery cap according to claim 1, wherein the connecting part is provided with a bending part welded with the welding part, the bending part and the welding part are enclosed to form an open groove.

7. The cylindrical battery cap according to claim 6, wherein a step is arranged on the bending part, and the welding part is welded with the step.

8. The cylindrical battery cap according to claim 1, wherein the welding part and the connecting part are welded using an ultrasonic welding or a laser welding.

9. The cylindrical battery cap according to claim 1, wherein an annular protrusion is arranged on the sealing ring, an annular groove is arranged on the connecting part, and the annular groove is configured to match with the annular protrusion.

10. A cylindrical battery, comprising the cylindrical battery cap according to any one of claims 1 to 9.
